# EUROPÄISCHE PATENTSCHRIFT

(11) **EP 2 880 326 B1**
(45) Veröffentlichungstag und Bekanntmachung des Hinweises auf die Patenterteilung: **30.11.2016**
(21) Anmeldenummer: 13753565.4
(22) Anmeldetag: 01.08.2013
(51) Int. Cl.: F16D 13/58

(54) **DOPPELKUPPLUNG**
DUAL CLUTCH
DOUBLE EMBRAYAGE

(30) Priorität: 03.08.2012 DE 102012213801
(43) Veröffentlichungstag der Anmeldung: 10.06.2015
(73) Patentinhaber: Schaeffler Technologies AG & Co. KG, 91074 Herzogenaurach (DE)
(72) Erfinder: FÜNFGELD, Simon Sebastian, 71297 Mönsheim (DE); WEYDMANN, Patrick, 77815 Bühl (DE); GANDER, Gerhard, 77830 Bühlertal (DE); OBITZ, Alexander, 77815 Bühl (DE)
(86) Internationale Anmeldenummer: PCT/DE2013/200089
(87) Internationale Veröffentlichungsnummer: WO 2014/019584

(56) Entgegenhaltungen:
- DE-A1- 10 340 665
- DE-A1-102004 018 377
- DE-A1-102011 101 555
- FR-A1- 2 694 967
- FR-A1- 2 860 845

## Beschreibung

Die Erfindung betrifft eine Doppelkupplung zum Kuppeln einer Antriebswelle eines Kraftfahrzeugmotors mit einer Getriebewelle eines Kraftfahrzeuggetriebes und/oder einem Nebenantrieb des Kraftfahrzeuges. Derartige Kupplungsaggregate finden beispielsweise Verwendung bei Traktoren oder anderen Arbeitsmaschinen für die Landwirtschaft. Dabei dient eine erste Reibungskupplung für den Fahrbetrieb und eine zweite Reibungskupplung zum unabhängigen Zuschalten und Abschalten eines zusätzlichen Nebenabtriebes, mittels dessen zusätzliche Aggregate antreibbar sind. Die zweite Reibungskupplung ist üblicherweise in einem nicht eingerückten Zustand geöffnet, beispielsweise beim Starten des Kraftfahrzeugmotors, und kann in einem eingerückten Zustand benötigte Leistung direkt von der Antriebswelle abnehmen. Durch die unabhängige Betätigung der zweiten Reibungskupplung kann der Nebenantrieb im Stand oder auch während der Fahrt des Kraftfahrzeuges eingesetzt werden. Eine Doppelkupplung ist z.B. aus der DE 10 2004018 377 bekannt. Mit der zweiten Reibungskupplung können beispielsweise Mähmaschinen und andere landwirtschaftliche Anbaugeräte wie mechanische oder hydraulische Winden, Hydraulikpumpen oder Kompressoren angetrieben werden, die im Gegensatz zu elektrischen Geräten deutlich mehr Leistung bieten und ein elektrisches Bordnetz des Kraftfahrzeuges nicht belasten. Diese Doppelkupplungen weisen jedoch üblicherweise eine große Toleranzabhängigkeit der Anpresskraft und der Einrückkräfte auf, sowie eine spannungskritische Belastung des Betätigungssystems insbesondere der zweiten Reibungskupplung der Doppelkupplung bei einem Einrücken. Es ist daher die Aufgabe der Erfindung, eine Doppelkupplung bereitzustellen, die in Absenken der Toleranzabhängigkeit von Anpress- und Einrückkraft ermöglicht, und eine Reduzierung der Spannungen im Betätigungssystem ermöglicht.

Die Lösung der Aufgabe erfolgt erfindungsgemäß durch die Merkmale des Anspruchs 1. Bevorzugte Ausgestaltungen der Erfindung sind in den Unteransprüchen angegeben, die jeweils einzeln oder in Kombination einen Aspekt der Erfindung darstellen können. Erfindungsgemäß ist eine Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, vorgesehen mit einer ersten Reibungskupplung zum reibschlüssigen Verpressen einer mit der Getriebewelle koppelbaren ersten Kupplungsscheibe zwischen einer ersten Anpressplatte und einer ersten Gegenplatte, wobei die erste Anpressplatte zum Schließen der ersten Reibungskupplung in eine Axialrichtung verlagerbar ist, einer zweite Reibungskupplung zum reibschlüssigen Verpressen einer mit dem Nebenabtrieb koppelbaren zweiten Kupplungsscheibe zwischen einer zweiten Anpressplatte und einer zweiten Gegenplatte, wobei die zweite Anpressplatte zum Schließen der zweiten Reibungskupplung in die Axialrichtung verlagerbar ist, einem ersten Betätigungselement zum Verlagern der ersten Anpressplatte, einem zweiten Betätigungselement zum Verlagern der zweiten Anpressplatte, wobei die zweite Anpressplatte mit einem mit dem zweiten Betätigungselement wirkverbundenen Druckring zur Übertragung der Verlagerungsbewegung verbunden ist. Erfindungsgemäß weist das zweite Betätigungselement mindestens ein Federelement zum Vorspannen auf, wobei das mindestens eine Federelement zwischen dem zweiten Betätigungselement und dem Druckring angeordnet ist.

Die erste Kupplungsscheibe kann über eine Verzahnung mit der Getriebewelle drehfest, aber axial beweglich verbunden sein, die zweite Kupplungsscheibe kann über eine Verzahnung mit dem Nebentrieb drehfest, aber axial beweglich verbunden sein. Die jeweilige Kupplungsscheibe der zugeordneten Reibungskupplung kann insbesondere an voneinander wegweisenden axialen Stirnflächen jeweils einen Reibbelag aufweisen, der mit einem gegebenenfalls vorgesehenen Reibbelag der zugehörigen Gegenplatte und/oder Anpressplatte reibschlüssig in Kontakt kommen kann, um die jeweilige Reibungskupplung zu schließen. Die Doppelkupplung, insbesondere die erste Reibungskupplung der Doppelkupplung, kann einen Schwingungsdämpfer aufweisen. Als Schwingungsdämpfer kann beispielsweise ein Zweimassenschwungrad und/oder ein Fliehkraftpendel und/oder ein Massependel verwendet werden, welches beispielsweise an der ersten Kupplungsscheibe angeordnet sein kann. Die Doppelkupplung kann eine unabhängig betätigbare erste Reibungskupplung in Form einer Blechdeckeleinfachkupplung aufweisen, um einen Kraftschluss zwischen dem Kraftfahrzeugmotor, insbesondere der Antriebswelle des Kraftfahrzeugmotors, und der Getriebewelle zum Antrieb des Kraftfahrzeuges herzustellen. Die zweite Reibungskupplung kann in Form einer Nebenabtriebskupplung als Unterbau an der ersten Reibungskupplung angeordnet sein, beispielsweise zwischen der ersten Reibungskupplung und einer Schwungscheibe des Kraftfahrzeugmotors. Die Nebenabtriebskupplung, beispielsweise eine Zapfwelle eines Traktors, kann als Sicherheitszapfwellenkupplung ausgebildet sein, wobei bei einem Fehler am Einrückmechanismus, insbesondere dem zweiten Betätigungselement, die Nebenabtriebskupplung sofort öffnet und der abgekoppelte Nebenabtrieb zum Stillstand kommen kann. Der Nebenabtrieb kann in Form einer direkt angetriebenen Motorzapfwelle ausgebildet sein, welche über die zweite Reibungskupplung direkt mit dem Kraftfahrzeugmotor verbindbar ist, und somit unabhängig von einer Fortbewegung des Kraftfahrzeuges mit der Motordrehzahl des Kraftfahrzeugmotors betrieben werden kann. Nebenabtriebskupplungen werden üblicherweise nach der Abkürzung des englischen Begriffes Power take-off als PTO bezeichnet, wobei eine Sicherheitsnebenabtriebskupplung, oder Sicherheitskupplung, als Safety-PTO bezeichnet werden kann.

Die erste Reibungskupplung ist durch eine zumindest teilweise axiale Verlagerung des ersten Betätigungselementes betätigbar, wobei die erste Anpressplatte in axialer Richtung zu der ersten Gegendruckplatte hin verlagert werden kann, wobei durch ein reibschlüssiges Verpressen der ersten Kupplungsscheibe zwischen der ersten Anpressplatte und der ersten Gegenplatte ein Kraftschluss zwischen dem Kraftfahrzeugmotor und der Getriebewelle zum Antrieb des Kraftfahrzeuges hergestellt werden kann. Das erste Betätigungselement kann beispielsweise in Form einer ersten Hebelfeder ausgebildet sein, welche unabhängig von einem zweiten Betätigungselement betätigbar ist. Unabhängig von der ersten Reibungskupplung ist die zweite Reibungskupplung mittels des zweiten Betätigungselementes und eines Druckrings einrückbar, um einen Kraftschluss zwischen dem Kraftfahrzeugmotor und dem Nebenabtrieb, beispielsweise einer Zapfwelle, herzustellen.

Das zweite Betätigungselement weist dabei mindestens ein zusätzliches Federelement auf, wobei das Federelement in einem montierten Zustand vorgespannt an dem zweiten Betätigungselement angeordnet ist und zwischen dem zweiten Betätigungselement und dem Druckring angeordnet ist. Das mindestens eine Federelement, vorzugsweise mehrere Federelemente, wirken in einem montierten Zustand wie ein vorgespannter Druckkraftspeicher, der zwischen dem zweiten Betätigungselement und dem Druckring angeordnet ist, wobei eine Verlagerung des zweiten Betätigungselementes über das mindestens eine Federelement auf den Druckring übertragbar ist, wodurch eine Verlagerung des Druckringes bewirkt werden kann. Der Druckring kann dabei topfähnliche oder topfförmig ausgebildet sein und die erste Reibungskupplung, welche innerhalb eines Kupplungsdeckels angeordnet sein kann, außenseitig umfassen, wobei der Kupplungsdeckel zumindest teilweise von dem Druckring umfasst werden kann. Der Druckring ist dabei mit der zweiten Anpressplatte der zweiten Reibungskupplung verbunden. Die zweite Reibungskupplung kann dabei in einem unbetätigten Zustand geöffnet sein. Das Einrücken des Druckringes und damit der zweiten Anpressplatte erfolgt über eine Betätigung des zweiten Betätigungselementes, welches stirnseitig an dem Kupplungsdeckel der ersten Reibungskupplung auf einer der ersten und der zweiten Anpressplatte abgewandten Seite mittels angeordnet sein kann. Das zweite Betätigungselement kann dabei mittels an dem Kupplungsdeckel der ersten Reibungskupplung befestigter Bolzen und einem an den Bolzen angeordneten Auflagedrahtring beweglich, vorzugsweise kippbar, gelagert sein. Der Auflagedrahtring kann radial außenseitig um die Bolzen gespannt sein, wobei das zweite Betätigungselement in Form einer zweiten Hebelfeder den Auflagedrahtring und/oder die Bolzen derart kontaktiert, dass die Hebelfeder, insbesondere bei einer Betätigung des zweiten Betätigungselementes, kippbar an dem Auflagedrahtring und/oder den Bolzen gelagert ist.

Das mindestens eine Federelement kann derart ausgebildet und an dem zweiten Betätigungselement angeordnet sein, das in einem montierten Zustand, insbesondere durch eine elastische Verformung des Federelementes, eine Vorspannkraft in dem Federelement bewirkt werden kann, wobei die Vorspannkraft einer Verlagerung bei einem Einrücken und Betätigen des zweiten Betätigungselementes entgegenwirken kann. Vorzugsweise kann die Vorspannkraft des Federelementes in axialer Richtung, insbesondere in eine der zweiten Anpressplatte abgewandte axiale Richtung, wirken. Eine Einrückkraft zur Betätigung der zweiten Reibungskupplung, welche radial innenseitig auf das zweite Betätigungselement wirken kann, kann durch die voneinander beabstandete Lagerung und/oder Kontaktierung des zweiten Betätigungselementes an dem Auflagedrahtring sowie der Lagerung des Federelementes an dem Druckring eine Übersetzung der auf den Druckring übertragenen Einrückkraft bewirken.

Beim Einrücken infolge einer Einrückkraft besitzt das zweite Betätigungselement mit dem mindestens einen Federelement, vorzugsweise die Gruppe aus dem zweiten Betätigungselement mit dem mindestens einen Federelement, zunächst eine hohe Steifigkeit, bis die übersetzte Einrückkraft die durch das Federelement bewirkte Vorspannkraft überschreitet. Bis zum Überschreiten der Vorspannkraft kann mindestens eine Federelement sein Position und im Wesentlichen seine Form beibehalten. Mit Übersteigen der Vorspannkraft kann das mindestens eine vorgespannte Federelement weiter elastisch verformt, beispielsweise durchgedrückt, werden, so dass bei weiterem Einrücken des zweiten Betätigungselementes eine Verformung im Wesentlichen in dem mindestens einen Federelement auftritt, wodurch die über das mindestens eine Federelemente auf den Druckring und damit auf die zweite Anpressplatte übertragene Anpresskraft nach Überwindung der Vorspannung auf einer flachen Kraftkennlinie verlaufen kann. Durch das mindestens eine vorgespannte Federelement des zweiten Betätigungselementes können in dem zweiten Betätigungselement zwei Steifigkeiten unterschiedlicher Größe integriert werden. Dadurch kann die Anpresskraft entsprechend der gewählten Steifigkeiten zwei Bereiche mit einem unterschiedlichen Verlauf der Kraftkennlinie aufweisen, beispielsweise in Form eines abgewinkelten Kennlinienverlaufes mit einem im Wesentlichen linearen steileren Anstieg der Anpresskraft in einem ersten Abschnitt und einem im Wesentlichen linearen flacher verlaufenden zweiten Abschnitt. Dadurch kann in dem zweiten Bereich ein flacherer Verlauf der Kennlinie der Anpresskraft der zweiten Anpressplatte über den im Betrieb relevanten Einrückweg sowohl in einem Neuzustand als auch in einem Verschleißzustand der zweiten Reibungskupplung gewährleistet werden. Somit kann eine Reduzierung der Anpresskraft im Verschleißfall vermieden werden und die Toleranzabhängigkeit der Anpresskraft und/oder Einrückkraft verringert werden. Durch die Integration zweier Steifigkeiten in das vorgespannte zweite Betätigungselement kann bei geringem Bauraum und mit geringem Materialeinsatz beim Einrücken eine anfänglich hohe Steifigkeit mit einer geringeren Steifigkeit in dem Eingerückten Zustand kombiniert werden, wodurch die Spannungen im Betätigungssystem bei einer Betätigung der zweiten Reibungskupplung verringert werden können.

In einer bevorzugten Ausführungsform ist das zweite Betätigungselement eine Hebelfeder mit nach radial innen gerichteten Hebelfederzungen, wobei mindestens ein Federelement an einer Hebelfederzunge angeordnet ist. An der Hebelfeder, insbesondere den Hebelfederzungen, können mehrere, vorzugsweise jeweils mindestens ein Federelement, angeordnet sein. Vorzugsweise weist jede der Hebelfederzungen der Hebelfeder ein separates Federelement auf. Die Federelemente können an einer dem Druckring zugewandten Unterseite der Hebelfederzunge vorgespannt angeordnet sein. Die Federelemente können in einem montierten Zustand elastisch verformt sein, wodurch eine in axialer Richtung, vorzugsweise von dem Druckring weg gerichtete, Vorspannkraft erzeugt werden kann.

Bei dem Einrücken infolge der Einrückkraft kann die übersetzte Einrückkraft zunächst geringer als die Vorspannung der Federelemente sein, wodurch die Federelemente ihr Position und im Wesentlichen ihre Form beibehalten können. In dieser Position kann die Hebelfeder zusammen mit dem mindestens einen Federelement eine hohe Steifigkeit aufweisen. Steigt die übersetzte Einrückkraft weiter an, kann das mindestens eine Federelemente elastisch weiter verformt, beispielsweise durchgedrückt, werden. Nach dem Überwinden der Vorspannkraft kann das mindestens eine Federelement eine geringe Steifigkeit aufweisen, so dass auch im Verschleißzustand der zweiten Reibungskupplung ein im Wesentlichen konstantes Anpresskraftniveau gehalten werden kann.

Besonders bevorzugt weisen die Hebelfederzungen eine Wölbung auf. Die Wölbung kann in dem Bereich der montierten Federelemente in den Hebelfederzungen, vorzugsweise jeder Hebelfederzunge, ausgebildet sein. Die Wölbung kann dabei von dem Druckring und dem Federelement weg ausgebildet sein, wobei die Wölbung bogenartig ausgebildet sein kann. Dadurch kann das Federelement zumindest teilweise beabstandet zu der Hebelfederzunge an der Hebelfeder angeordnet sein. Durch die Wölbung kann das Federelement im vorgespannten Zustand in einem radial inneren Bereich und in einem radial äußeren Bereich der Hebelfederzunge, beispielsweise radial innen und außen von der Wölbung, an der Hebelfederzunge anliegen und diese kontaktieren. Durch die Wölbung in der Hebelfederzunge kann bei einer Durchbiegung des Federelementes Raum zur axialen Verlagerung des Federelementes bei einem Einrücken der zweiten Reibungskupplung bereitgestellt werden, wodurch der benötigte Bauraum verringert werden kann.

In einer bevorzugten Ausführungsform ist mindestens ein Befestigungselement zur Befestigung eines Federelementes an einer Hebelfederzunge vorgesehen. Jedes Federelement kann durch mindestens jeweils ein Befestigungselement an einer Hebelfederzunge vorgespannt befestigt sein. Das mindestens eine Befestigungselement kann im Bereich der Wölbung und/oder radial innen und/oder radial außen von der Wölbung angeordnet sein. Das Befestigungselement kann in Form einer stoffschlüssigen, kraftschlüssigen und/oder formschlüssigen Verbindung ausgebildet sein. Vorzugsweise ermöglicht das mindestens eine Befestigungselement eine lösbare Befestigung des Federelementes an der Hebelfederzunge, wodurch eine größere Variabilität in der Einstellbarkeit der Steifigkeit beispielsweise durch Austausch eines oder mehrerer Federelemente ermöglicht werden kann.

In einer besonders bevorzugten Ausführungsform ist das Befestigungselement in Form einer Klipsverbindung mit mindestens zwei Halteklipsen ausgestaltet. Durch die Klipsverbindung kann eine lösbare Befestigung des Federelementes an der Hebelfederzunge ermöglicht werden. Die mindestens zwei Halteklipse können hakenförmig und im Wesentlichen mittig an den Längsseiten des Federelementes ausgebildet sein. Durch die Halteklipse kann das vorgespannte Federelement in einem montierten Zustand mit einer Vorspannkraft an der Hebelfederzunge befestigt sein. Durch die Halteklipsen kann das Federelement in Umfangsrichtung an der Hebelfederzunge festgelegt sein, wodurch das Federelement positioniert und gegen beispielsweise seitliches Verrutschen, insbesondere beim Einrücken, gesichert werden kann.

Vorzugsweise weist das Federelement eine Ausnehmung zur Anlage an einem Wulst des Druckringes auf. Die Ausnehmung kann in Form eine quer zur Längserstreckung des Federelementes angeordneten Kerbe ausgebildet sein. Die Ausnehmung kann im Wesentlichen an die Form des stirnseitig an dem Druckring ringförmig ausgebildeten Wulstes angepasst sein. Durch die Anlage der Ausnehmung an dem Wulst in einem montierten Zustand kann eine Positionierung des Federelementes in radialer Richtung und eine Sicherung gegen Verschieben, insbesondere beim Einrücken der zweiten Reibungskupplung, gewährleistet werden.

Die Erfindung betrifft ferner einen Getriebestrang für ein Kraftfahrzeug mit mindestens einer Doppelkupplung, die wie vorstehend beschrieben aus- und weitergebildet sein kann, zum Kuppeln einer Antriebswelle eines Kraftfahrzeugmotors mit einer Getriebewelle eines Kraftfahrzeuggetriebes und/oder einem Nebenabtrieb des Kraftfahrzeuges. Dadurch kann eine Reduzierung der Anpresskraft im Verschleißfall vermieden werden und die Toleranzabhängigkeit der Anpress- bzw. Betätigungskraft verringert werden.

Nachfolgend wird die Erfindung unter Bezugnahme auf die anliegenden Zeichnungen anhand bevorzugter Ausführungsbeispiele exemplarisch erläutert, wobei die nachstehend dargestellten Merkmale sowohl jeweils einzeln als auch in Kombination einen Aspekt der Erfindung darstellen können.

Es zeigen:
- Fig. 1:: eine schematische Schnittansicht einer erfindungsgemäßen Doppelkupplung;
- Fig. 2:: eine Gesamtansicht einer erfindungsgemäßen Doppelkupplung;
- Fig. 3:: eine zweites Betätigungselement mit Federelementen;
- Fig. 4a:: das zweites Betätigungselement aus Fig. 3 mit montierten Federelementen;
- Fig. 4b:: eine geschnittene Ansicht des vorgespannten zweiten Betätigungselementes aus Fig. 4a;
- Fig. 5:: einen Druckring mit vormontiertem zweiten Betätigungselement sowie Bolzen mit einem Auflagedrahtring; und
- Fig. 6:: ein Diagramm zur Darstellung der Kraftkennlinien einer Anpresskraft sowie einer Einrückkraft.

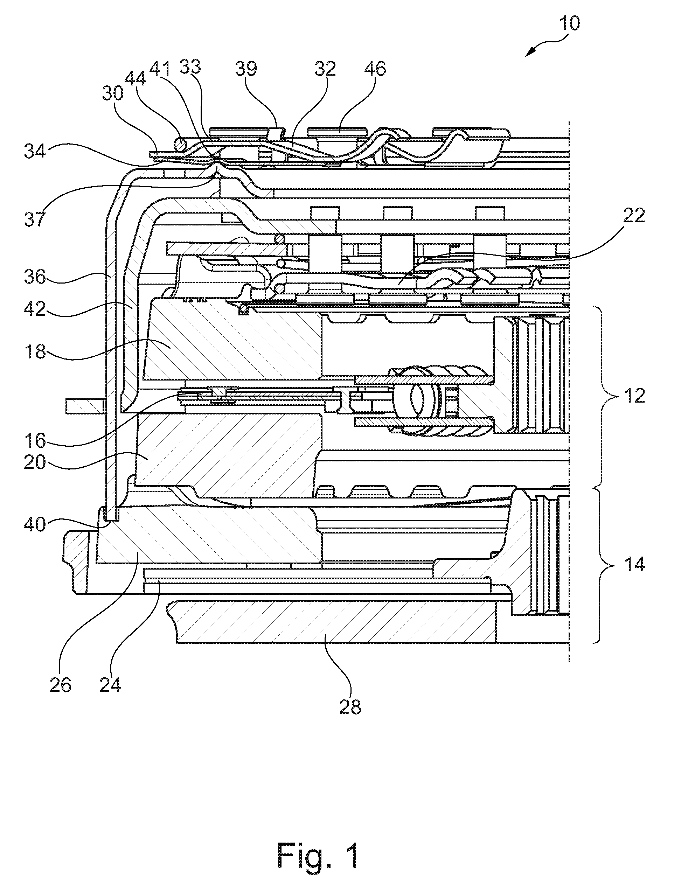

In Fig. 1 ist eine Doppelkupplung 10 mit einer ersten Reibungskupplung 12 und einer zweiten Reibungskupplung 14 dargestellt, wobei die erste Reibungskupplung 12 und die zweite Reibungskupplung 14 in einem nicht eingerückten unbetätigten Zustand dargestellt sind. Die erste Reibungskupplung 12 ist in Form einer Blechdeckeleinfachkupplung mit einer ersten Kupplungsscheibe 16 zum reibschlüssigen Verpressen zwischen einer ersten Anpressplatte 18 und einer ersten Gegenplatte 20 ausgebildet, wobei die erste Anpressplatte 18 durch Betätigen eines ersten Betätigungselementes 22 in Form einer ersten Hebelfeder, in eine axiale Richtung verlagerbar ist. Der ersten Reibungskupplung 12 ist die zweite Reibungskupplung 14 in Form einer Sicherheitsnebenabtriebskupplung mit einer zweiten Kupplungsscheibe 24 zum Verpressen zwischen einer zweiten Anpressplatte 26 und einer zweiten Gegenplatte 28 untergebaut, wobei die zweite Anpressplatte 26 bei einer Betätigung eines zweiten Betätigungselementes 30 in axialer Richtung unabhängig von der ersten Reibungskupplung 12 verlagerbar ist. Die zweite Reibungskupplung 14 ist in einem unbetätigten, geöffneten Zustand dargestellt. Das zweite Betätigungselement 30 ist in Form einer zweiten Hebelfeder mit sich radial nach innen erstreckenden Hebelfederzungen 32 ausgebildet. Das zweite Betätigungselement 30 weist mehrere axial vorgespannte Federelemente 34 auf, wobei an jeder Hebelfederzunge 32 der Hebelfeder ein Federelement 34 anpressplattenseitig angeordnet sind. Die Hebelfederzungen 32 weisen jeweils eine im Wesentlichen mittig ausgebildete Wölbung 33 auf, welche von der zweiten Anpressplatte 26 und dem Federelement 34 weg ausgebildet ist. Die Federelemente 34 sind jeweils im Bereich der Wölbung 33 derart angeordnet, dass die Federelemente 34 bogenartig oder brückenartig radial innen und radial außen von der Wölbung 33 die jeweilige Hebelfederzunge 32 kontaktieren. Die Übertragung einer Einrückbewegung bei Betätigung des durch die Federelemente 34 vorgespannten zweiten Betätigungselementes 30 in Form der zweiten Hebelfeder erfolgt über einen Druckring 36 auf die zweite Anpressplatte 26, welche mit dem Druckring 36 verbunden ist, wobei die Federelemente 34 des zweiten Betätigungselementes 30 den Druckring 36 zur Übertragung der Einrückbewegung kontaktieren. Der Druckring 36 ist durch eine Schraubverbindung 38 in radialer Richtung mit der zweiten Anpressplatte 26 gegen Lösen gesichert, wobei der Druckring 36 in einer Nut 40 in der zweiten Anpressplatte 26 aufgenommen ist. Die Nut 40 ist in einer der zweiten Kupplungsscheibe 24 abgewandten Fläche der zweiten Anpressplatte 26 radial außenseitig ausgebildet.

Der Druckring 36 umfasst die erste Reibungskupplung 12 im Wesentlichen außenseitig, wobei der Druckring 36 zumindest teilweise einen Kupplungsdeckel 42 der ersten Reibungskupplung 12 durchdringt, wodurch eine Führung des Druckringes durch den Kupplungsdeckel 42 der ersten Reibungskupplung 12 gewährleistet werden kann. An dem topfartig oder topfförmig ausgebildeten Druckring 36 ist stirnseitig, an einer dem zweiten Betätigungselement 30 zugewandten Stirnseite, ein ringförmig umlaufender Wulst 37 ausgebildet, welcher die Federelemente 34 des vorgespannten zweiten Betätigungselementes 30 kontaktiert. Der Wulst 37 kontaktiert radial innenseitig die Federelemente 34 des zweiten Betätigungselementes 30, welches radial außenseitig von der Kontaktstelle der Federelemente 34 mit dem Wulst 37 kippbar an einem Auflagedrahtring 44 abgestützt ist. Der Auflagedrahtring 44 ist radial außenseitig um mehrere Bolzen 46 herum angeordnet, welche mit dem Kupplungsdeckel 42 der ersten Reibungskupplung 12 verbunden sind. Durch den Abstand zwischen dem Auflagedrahtring 44 und dem Wulst 37 sowie der radial innenliegenden Einleitungsstelle der Einrückkraft kann eine Übersetzung der auf den Druckring 36 wirkenden Einrückkraft ermöglicht werden. Die Federelemente 34 sind jeweils mittels eines Befestigungselementes 35 in Form einer Klipsverbindung mit zwei hakenförmigen Halteklipsen 39 an den Hebelfederzungen 32 befestigt, wobei die Halteklipse 39 im Wesentlichen mittig und seitlich an den Federelementen 34 ausgebildet sind. Die Federelemente 34 weisen eine Ausnehmung 41 zur Anlage an dem Wulst 37 auf, welche der Form des Wulstes 37 angepasst ist.

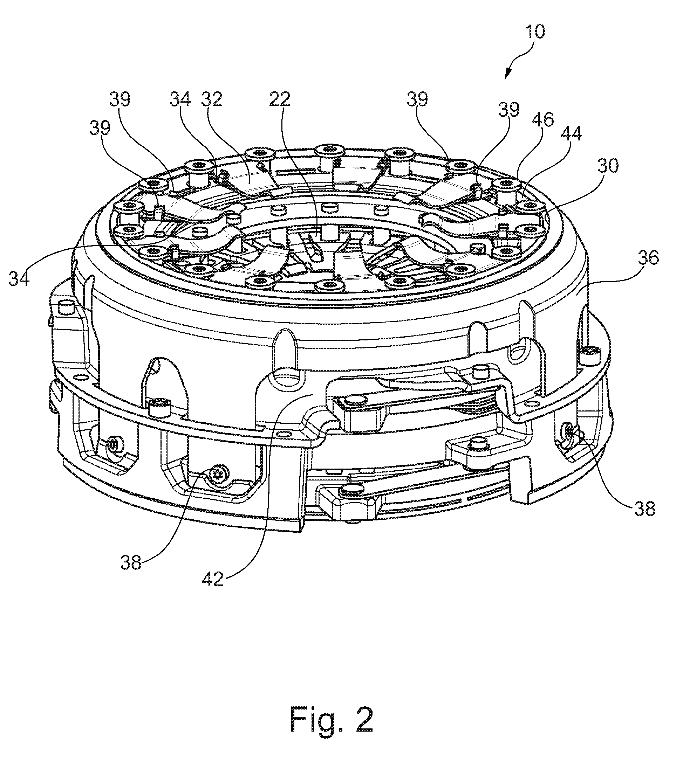

In Fig. 2 ist die Doppelkupplung 10 in einem montierten Zustand dargestellt, wobei die Hebelfederzungen 32 mit den daran vorgespannt montierten Federelementen 34 des vorgespannten zweiten Betätigungselementes 30 in einem unbetätigten Zustand dargestellt sind. Die Federelemente 34 kontaktieren den Wulst 37 des Druckringes 36. Das zweite Betätigungselement 30 liegt radial außenseitig an dem Druckring 36 an. Der Druckring 36 ragt an mehreren Stellen durch den Kupplungsdeckel 42 der ersten Reibungskupplung 12 hindurch und ist mit der zweiten Anpressplatte 26 der zweiten Reibungskupplung 14 durch radiale Schraubverbindungen 38 lösbar verbunden.

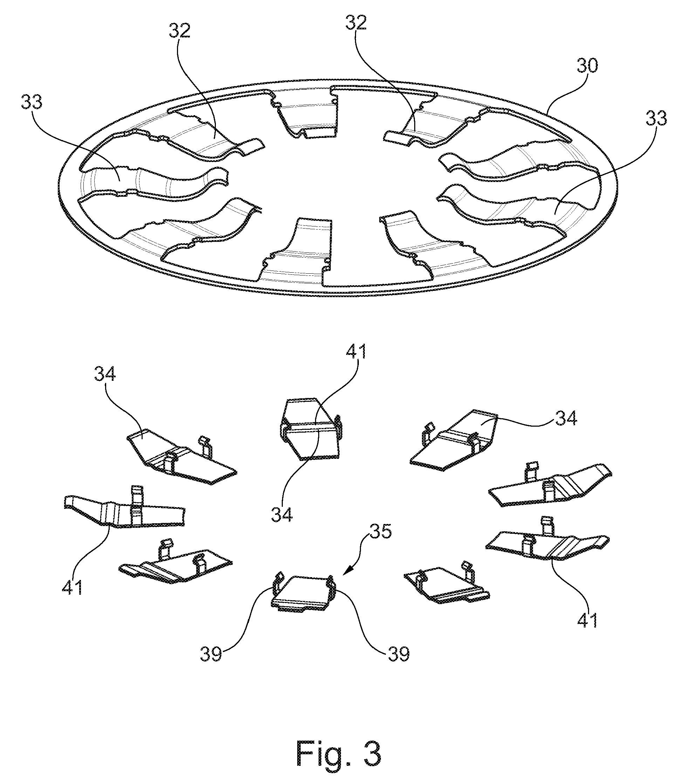

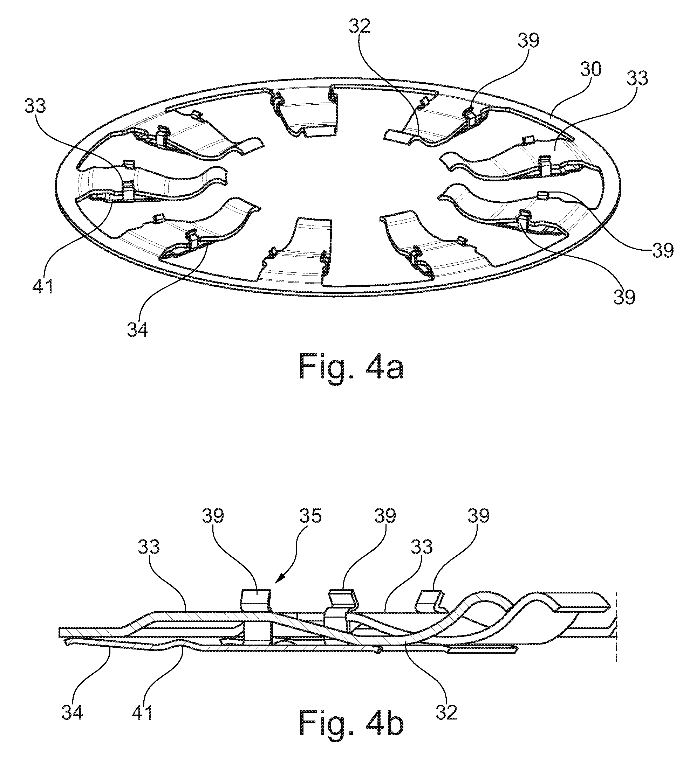

In Fig. 3 ist das zweite Betätigungselement 30 in einem unmontierten Zustand in Form einer Hebelfeder mit Hebelfederzungen 32 und dazu beabstandet angeordneten Federelementen 34 mit Befestigungselementen 35 in Form von hakenförmigen Halteklipsen 39 dargestellt. Das zweite Betätigungselement 30 weist neun radial innenseitig angeordnete Hebelfederzungen 32 und neun Federelemente 34 auf. Die Hebelfederzungen 34 weisen jeweils eine Wölbung 33 auf. Die Federelemente 34 weisen zur Anlage an dem Wulst des Druckringe (nicht dargestellt) eine Ausnehmung 41 auf, welche quer zur Längserstreckung der Federelemente 34 ausgebildet sind. Die Ausnehmungen können bogenförmig quer in den Federelementen 34 ausgebildet sein, um an dem ringförmig ausgebildeten Wulst spaltfrei anliegen zu können. Die Befestigungselemente 35 sind in Form von Klipsverbindungen mit jeweils zwei mittig und seitlich an den Federelementen 34 angeordneten hakenförmigen Halteklipsen 39 ausgebildet. In Fig. 4a ist das zweite Betätigungselement 30 in einem montierten Zustand mit den an den Hebelfederzungen 32 befestigten Federelementen 34 dargestellt. Durch die an den Hebelfederzungen 32 mit den Befestigungselementen 35 befestigten vorgespannten Federelementen 34 ist das zweite Befestigungselement 30 in axialer Richtung vorgespannt. Eine Schnittansicht entlang der Linie A-A einer Hebelfederzunge 32 mit einem daran angeordnetem Federelement 34 ist in Fig. 4b dargestellt. Das Federelement 34 wird durch die Halteklipse 39 im Bereich der Wölbung 33 an der Hebelfederzunge 32 vorgespannt gehalten.

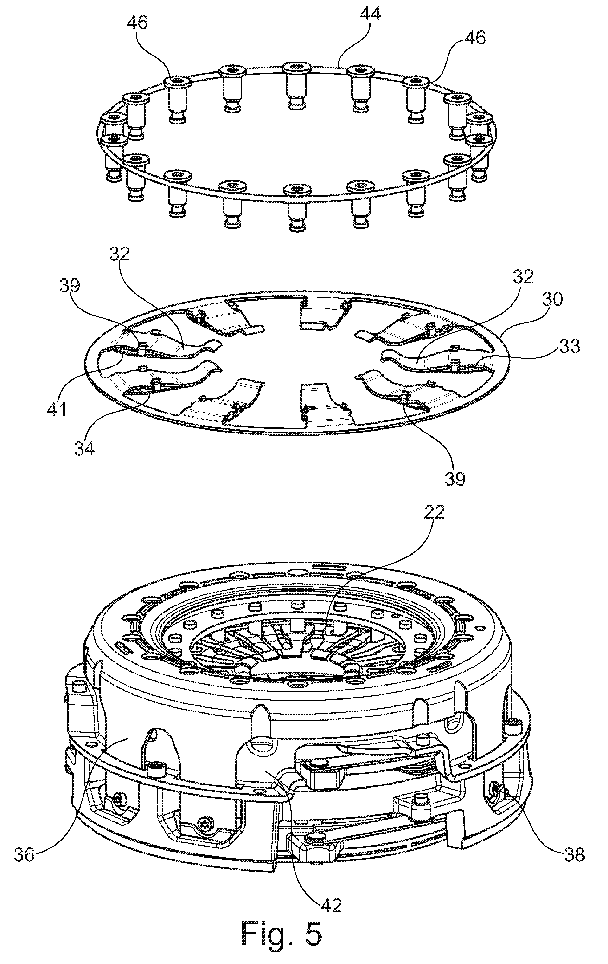

In Fig. 5 ist der Druckring 36 mit der restlichen Doppelkupplung 10 und einem beabstandeten vormontierten und vorgespannten zweiten Betätigungselement 30 dargestellt. Beabstandet zu dem Druckring 36 und dem vorgespannten zweiten Betätigungselement 30 mit den an den Hebelfederzungen 32 montierten Federelementen 34 dargestellt ist der Auflagedrahtring 44 mit den benötigten Bolzen 46 zur Befestigung an dem Kupplungsdeckel 42 der ersten Reibungskupplung 12.

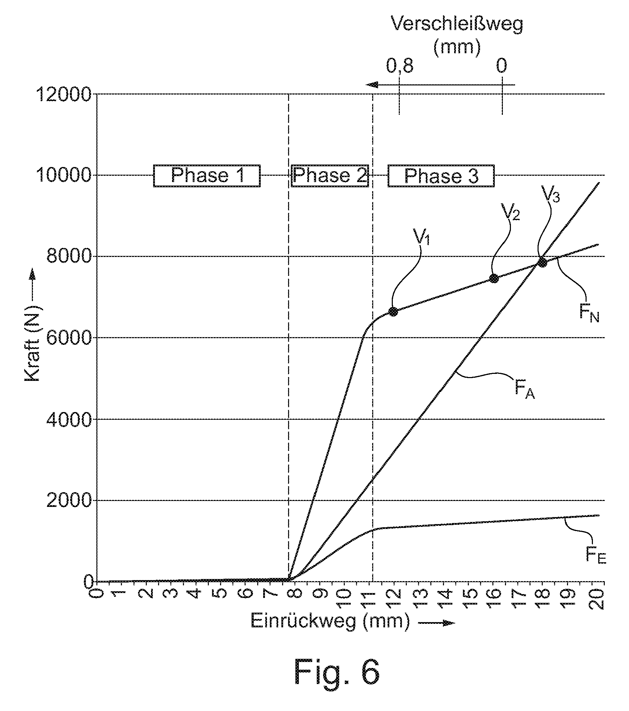

In Fig. 6 ist ein Diagramm zur Darstellung der Anpresskraft F_{N} der zweiten Reibungskupplung 14 der erfindungsgemäßen Doppelkupplung 10 im Vergleich zu einer Anpresskraft F_{A} einer herkömmlichen Doppelkupplung sowie der Einrückkraft F_{E}, welche zum Einrücken der zweiten Reibungskupplung 14 benötigt wird, dargestellt. Der Einrückvorgang der zweiten Reibungskupplung 14 kann in drei Phasen dargestellt werden. In der ersten Phase wirkt die Einrückkraft F_{E} radial innenseitig auf das vorgespannte zweite Betätigungselement 30 mit den Federelementen 34, insbesondere auf die Hebelfederzungen 32 mit den dran vorgespannt montierten Federelementen 34. In der ersten Phase wird dabei durch die Verlagerung der zweiten Anpressplatte 26 zunächst das Spiel zwischen der zweiten Anpressplatte 26 und der zweiten Kupplungsscheibe 24 überwunden, wobei das Spiel beispielsweise 1,3 mm betragen kann. Durch das Spiel wird in der ersten Phase keine Anpresskraft F_{N,A} erzeugt, und das vorgespannte zweite Betätigungselement 30 kippt radial außenseitig um den Auflagedrahtring 44, ihren Drehpunkt. Mit Überwindung des Spiels zwischen zweiter Anpressplatte 26 und der zweiten Kupplungsscheibe 24 beginnt die zweite Phase des Einrückvorganges, in der die zweite Anpressplatte 26 die zweite Kupplungsscheibe 24 gegen die zweite Gegenplatte 28 presst, wobei die zweite Gegenplatte 28 beispielsweise in Form eines Schwungrades ausgebildet sein kann. Durch die Ausgestaltung, insbesondere der Steifigkeiten, des vorgespannten zweiten Betätigungselementes 30, insbesondere der Hebelfederzungen 32 mit den daran vorgespannt montierten Federelementen 34, wird die auf den Druckring 36 wirkende Einrückkraft F_{E} übersetzt. Solange die Einrückkraft F_{E} geringer ist als die Vorspannkraft des vorgespannten zweiten Betätigungselementes 30, bleiben die Federelemente 34 an den Hebelfederzungen 32 in Position und können im Wesentlichen unverformt bleiben, wobei die Gruppe aus Hebelfederzungen 32 und Federelementen 34 eine hohe Steifigkeit besitzt. Dadurch kann ein steiler im Wesentlichen linearer Anstieg der Anpresskraft F_{N} in der zweiten Phase bei einem im Wesentlichen linearen Anstieg der Einrückkraft F_{E} ermöglicht werden.

Die dritte Phase des Einrückvorganges beginnt im Wesentlichen bei Überschreiten der Vorspannkraft, insbesondere der Federelemente 34, des vorgespannten zweiten Betätigungselementes 30 durch die Einrückkraft F_{E}, wodurch bei zunehmendem Einrücken die Federelemente 34 weiter elastisch verformt, beispielsweise durchgedrückt, werden können. Hierbei findet die elastische Verformung im Wesentlichen in den Federelementen 34 statt, bedingt durch die geringere Steifigkeit. Durch die Integration zweier Steifigkeiten in das vorgespannte zweite Betätigungselement 30, insbesondere in die Hebelfederzungen 32 mit den vorgespannt daran befestigten Federelementen 34, kann bei beim Einrücken eine anfänglich hohe Steifigkeit mit einer geringeren Steifigkeit in dem Eingerückten Zustand kombiniert werden. Dadurch kann im Vergleich zur zweiten Phase in der dritten Phase, dem für den Betrieb relevanten Einrückbereich, eine geringere lineare Steigung der Anpresskraft F_{N} bei zunehmendem Einrückweg ermöglicht werden. Die Kurve der Anpresskraft F_{N} flacht beim Übergang von der zweiten in die dritte Phase aufgrund der integrierten zwei unterschiedlichen Steifigkeiten deutlich ab. Der während des zuverlässigen Betriebs der zweiten Reibungskupplung 14 relevante Einrückweg setzt sich zusammen aus der Wegdifferenz zwischen dem maximalen und minimalen Einrückweg, V₃ bis V₂, und dem auftretenden Verschleiß, V₂ bis V₁, wobei bei V₂ kein Verschleiß vorliegt und bei V₁ der maximale Verschleiß von beispielsweise 0,8 mm vorliegt. Über den relevanten Einrückweg in der dritten Phase kann eine Anpresskraft F_{N} mit einer sehr geringen linearen Steigung gewährleistet werden. Die zum Betätigen der zweiten Reibungskupplung 14 benötigte Einrückkraft F_{E} weist nach einem im Wesentlichen linearen Anstieg in der zweiten Phase in der dritten Phase über den relevanten Einrückweg von V₃ über V₂ bis V₁ im Wesentlichen eine sehr geringe Steigung auf, welche annähernd konstant ist. Im Vergleich zur Anpresskraft F_{N} einer erfindungsgemäßen Doppelkupplung 10 ist die Anpresskraft F_{A} einer herkömmlichen Doppelkupplung dargestellt, die in der dritten Phase einen im Wesentlichen linearen Verlauf der Anpresskraft F_{A} aufweist, wodurch beispielsweise im Verschleißfall, V₂ bis V₁, ein erheblicher Rückgang der Anpresskraft F_{A} auftritt.

### Bezugszeichenliste

- 10: Doppelkupplung
- 12: erste Reibungskupplung
- 14: zweite Reibungskupplung
- 16: erste Kupplungsscheibe
- 18: erste Anpressplatte
- 20: erste Gegenplatte
- 22: erstes Betätigungselement
- 24: zweite Kupplungsscheibe
- 26: zweite Anpressplatte
- 28: zweite Gegenplatte
- 30: zweites Betätigungselement
- 32: Hebelfederzunge
- 33: Wölbung
- 34: Federelement
- 35: Befestigungselement
- 36: Druckring
- 37: Wulst
- 38: Schraubverbindung
- 39: Halteklipse
- 40: Nut
- 41: Ausnehmung
- 42: Kupplungsdeckel
- 44: Auflagedrahtring
- 46: Bolzen

- F_{N}: Anpresskraft
- F_{E}: Einrückkraft
- F_{A}: Anpresskraft

- V₁: Verschleißbereichsende
- V₂: Verschleißbereichsanfang, minimaler Einrückweg
- V₃: maximaler Einrückweg

## Patentansprüche

1. Doppelkupplung zum Kuppeln einer Antriebswelle eines Kraftfahrzeugmotors mit einer Getriebewelle eines Kraftfahrzeuggetriebes und/oder einem Nebenabtrieb des Kraftfahrzeuges, insbesondere einer Zapfwelle, mit
einer ersten Reibungskupplung (12) zum reibschlüssigen Verpressen einer mit der Getriebewelle koppelbaren ersten Kupplungsscheibe (16) zwischen einer ersten Anpressplatte (18) und einer ersten Gegenplatte (20), wobei die erste Anpressplatte (18) zum Schließen der ersten Reibungskupplung (12) in eine Axialrichtung verlagerbar ist, einer zweite Reibungskupplung (14) zum reibschlüssigen Verpressen einer mit dem Nebenabtrieb koppelbaren zweiten Kupplungsscheibe (24) zwischen einer zweiten Anpressplatte (26) und einer zweiten Gegenplatte (28), wobei die zweite Anpressplatte (26) zum Schließen der zweiten Reibungskupplung (14) in die Axialrichtung verlagerbar ist,
einem ersten Betätigungselement (22) zum Verlagern der ersten Anpressplatte (18), einem zweiten Betätigungselement (30) zum Verlagern der zweiten Anpressplatte (26), wobei die zweite Anpressplatte (26) mit einem mit dem zweiten Betätigungselement (30) wirkverbundenen Druckring (36) zur Übertragung der Verlagerungsbewegung verbunden ist, **dadurch gekennzeichnet, dass**
das zweite Betätigungselemente (30) mindestens ein Federelement (34) zum Vorspannen aufweist, wobei das mindestens eine Federelement (34) zwischen dem zweiten Betätigungselement (30) und dem Druckring (36) angeordnet ist.

2. Doppelkupplung nach Anspruch 1, **dadurch gekennzeichnet, dass** das zweite Betätigungselement (30) eine Hebelfeder mit nach radial innen gerichteten Hebelfederzungen (32) ist, wobei mindestens ein Federelement (34) an einer Hebelfederzungen (32) angeordnet ist.

3. Doppelkupplung nach Anspruch 2, **dadurch gekennzeichnet, dass** die Hebelfederzungen (32) eine Wölbung (33) aufweisen.

4. Doppelkupplung nach einem der vorherigen Ansprüche, **dadurch gekennzeichnet, dass** mindestens ein Befestigungselement (35) zur Befestigung eines Federelementes (34) an einer Hebelfederzunge (32) vorgesehen ist.

5. Doppelkupplung nach Anspruch 4, **dadurch gekennzeichnet, dass** das Befestigungselement (35) in Form einer Klipsverbindung mit mindestens zwei Halteklipsen (39) ausgestaltet ist.

6. Doppelkupplung nach einem der vorherigen Ansprüche, **dadurch gekennzeichnet, dass** das Federelement (34) eine Ausnehmung (41) zur Anlage an einem Wulst (37) des Druckringes (36) aufweist.

7. Getriebestrang mit mindestens einer Doppelkupplung (10) zum Kuppeln einer Antriebswelle eines Kraftfahrzeugmotors mit einer Getriebewelle eines Kraftfahrzeuggetriebes und/oder einem Nebenabtrieb des Kraftfahrzeuges für ein Kraftfahrzeug nach einem der Ansprüche 1 bis 6.

## Claims

1. Double clutch for coupling a drive shaft of a motor vehicle engine to a transmission shaft of a motor vehicle transmission and/or a power take-off of the motor vehicle, in particular a power take-off shaft, having
a first friction clutch (12) for pressing a first clutch plate (16) which can be coupled to the transmission shaft between a first pressure plate (18) and a first counterplate (20) in a frictionally locking manner, it being possible for the first pressure plate (18) to be displaced in an axial direction in order to close the first friction clutch (12), a second friction clutch (14) for pressing a second clutch plate (24) which can be coupled to the power take-off between a second pressure plate (26) and a second counterplate (28) in a frictionally locking manner, it being possible for the second pressure plate (26) to be displaced in the axial direction in order to close the second friction clutch (14),
a first actuating element (22) for displacing the first pressure plate (18),
a second actuating element (30) for displacing the second pressure plate (26), the second pressure plate (26) being connected to a thrust ring (36) which is operatively connected to the second actuating element (30), in order to transmit the displacement movement, **characterized in that**
the second actuating element (30) has at least one spring element (34) for prestressing purposes, the at least one spring element (34) being arranged between the second actuating element (30) and the thrust ring (36).

2. Double clutch according to Claim 1, **characterized in that** the second actuating element (30) is a lever spring with radially inwardly directed lever spring tongues (32), at least one spring element (34) being arranged on a lever spring tongue (32).

3. Double clutch according to Claim 2, **characterized in that** the lever spring tongues (32) have a curvature (33).

4. Double clutch according to one of the preceding claims, **characterized in that** at least one fastening element (35) is provided for fastening a spring element (34) to a lever spring tongue (32).

5. Double clutch according to Claim 4, **characterized in that** the fastening element (35) is configured in the form of a clip connection with at least two holding clips (39).

6. Double clutch according to one of the preceding claims, **characterized in that** the spring element (34) has a recess (41) for bearing against a bead (37) of
the thrust ring (36).

7. Power train having at least one double clutch (10) for coupling a drive shaft of a motor vehicle engine to a transmission shaft of a motor vehicle transmission and/or a power take-off of the motor vehicle for a motor vehicle according to one of Claims 1 to 6.

## Revendications

1. Double embrayage pour l'accouplement d'un arbre d'entraînement d'un moteur de véhicule automobile à un arbre de transmission d'une transmission d'un véhicule automobile, et/ou à un arbre auxiliaire du véhicule automobile, en particulier une prise de force, comprenant :
un premier embrayage à friction (12) pour presser par engagement par friction un premier disque d'embrayage (16) pouvant être accouplé à l'arbre de transmission entre une première plaque de pressage (18) et une première plaque conjuguée (20), la première plaque de pressage (18), pour fermer le premier embrayage à friction (12), pouvant être déplacée dans une direction axiale,
un deuxième embrayage à friction (14) pour le pressage par engagement par friction d'un deuxième disque d'embrayage (24) pouvant être accouplé à l'arbre auxiliaire entre une deuxième plaque de pressage (26) et une deuxième plaque conjuguée (28), la deuxième plaque de pressage (26), pour fermer le deuxième embrayage à friction (14),
pouvant être déplacée dans la direction axiale,
un premier élément d'actionnement (22) pour déplacer la première plaque de pressage (18),
un deuxième élément d'actionnement (30) pour déplacer la deuxième plaque de pressage (26),
la deuxième plaque de pressage (26) étant connectée à une bague de pression (36) connectée fonctionnellement au deuxième élément d'actionnement (30), pour le transfert du mouvement de déplacement,
**caractérisé en ce que**
le deuxième élément d'actionnement (30) présente au moins un élément de ressort (34) pour exercer une précontrainte, l'au moins un élément de ressort (34) étant disposé entre le deuxième élément d'actionnement (30) et la bague de pression (36).

2. Double embrayage selon la revendication 1, **caractérisé en ce que** le deuxième élément d'actionnement (30) est un ressort à levier avec des langues de ressort à levier (32) orientées radialement vers l'intérieur, au moins un élément de ressort (34) étant disposé sur une langue de ressort à levier (32).

3. Double embrayage selon la revendication 2, **caractérisé en ce que** les langues de ressort à levier (32) présentent une courbure (33).

4. Double embrayage selon l'une quelconque des revendications précédentes, **caractérisé en ce qu'**au moins un élément de fixation (35) est prévu pour fixer un élément de ressort (34) à une langue de ressort à levier (32).

5. Double embrayage selon la revendication 4, **caractérisé en ce que** l'élément de fixation ( 35) est configuré en forme de connexion à enclipsage avec au moins deux clips de fixation (39).

6. Double embrayage selon l'une quelconque des revendications précédentes, **caractérisé en ce que** l'élément de ressort (34) présente un évidement (41) pour l'application contre un bourrelet (37) de la bague de pression (36).

7. Chaîne de transmission comprenant au moins un double embrayage (10) pour l'accouplement d'un arbre d'entraînement d'un moteur de véhicule automobile à un arbre de transmission d'une transmission de véhicule automobile et/ou à un arbre auxiliaire du véhicule automobile, pour un véhicule automobile selon l'une quelconque des revendications 1 à 6.
